# EUROPEAN PATENT SPECIFICATION

(11) **EP 4 357 687 B1**
(45) Date of publication and mention of the grant of the patent: **01.04.2026**
(21) Application number: 23204729.0
(22) Date of filing: 19.10.2023
(51) Int. Cl.: F24F 7/06, F24F 11/00, F24F 11/30, F24F 11/65, F24F 11/77

(54) **AIR CONDITIONING SYSTEM**
KLIMAANLAGE
SYSTÈME DE CLIMATISATION

(30) Priority: 21.10.2022 JP 2022169443
(43) Date of publication of application: 24.04.2024
(73) Proprietor: Panasonic Intellectual Property Management Co., Ltd., Kadoma-shi, Osaka 571-0057 (JP)
(72) Inventor: YAEGASHI, Masahiro, Kadoma-shi, Osaka, 571-0057 (JP); TOMOCHIKA, Kazuyoshi, Kadoma-shi, Osaka, 571-0057 (JP); YAMAZAKI, Junki, Kadoma-shi, Osaka, 571-0057 (JP); HATANO, Dai, Kadoma-shi, Osaka, 571-0057 (JP); ARAI, Hirofumi, Kadoma-shi, Osaka, 571-0057 (JP)
(74) Representative: Eisenführ Speiser

(56) References cited:
- JP-A- 2008 134 004
- JP-A- 2011 058 724
- JP-A- 2016 109 359

## Description

### BACKGROUND OF THE INVENTION

### Field of the Invention

The present invention relates to an air conditioning system.

### Description of the Related Art

Japanese Patent Laid-Open No. 2022-050948 discloses an air conditioning system in which an air conditioning indoor unit is connected to a ventilation device with a duct, the air conditioning system providing air conditioning of a room by the air conditioning indoor unit and exhausting air in the room and supplying external air by the ventilation device.

Japanese patent application 2016 109359 A discloses an air conditioner including an indoor unit that has a cabinet with an inlet, an outlet and an air passage extending there between. An indoor heat exchanger and an indoor fan are disposed in the air passage. A filter is provided along the inlet. A control device controls internal cleaning operations, and automatically starts a cleaning operation after the cooling operation is stopped.

The present disclosure provides an air conditioning system capable of securing convenience of a user by preventing reverse flow of air in a state where an air conditioning indoor unit is stopped and capable of achieving energy saving.

### SUMMARY OF THE INVENTION

To achieve the above-described object, an air conditioning system of the present disclosure is an air conditioning system in which an air conditioning indoor unit including an indoor fan and a heat exchanger is connected to a ventilation device including a ventilation fan with an indoor side exhaust air duct. When the ventilation fan is made to operate, air in a room is exhausted to outside via the indoor side exhaust air duct and an outdoor side exhaust air duct of the ventilation device, external air is sent to the air conditioning indoor unit via an outdoor side air intake duct and an indoor side air intake duct, and air conditioning in the room is performed while the external air is introduced, the air conditioning system including a control unit that drives and controls the indoor fan and the ventilation fan, the control unit performing control to drive the ventilation fan in a case where the indoor fan is driven, stop the ventilation fan in a case where the indoor fan is stopped, and stop the ventilation fan in a case where the indoor fan is driven after operation of the air conditioning indoor unit is stopped. The control unit stops the ventilation fan of the ventilation device or controls the ventilation fan of the ventilation device to operate at mild airflow in a case where the air conditioning indoor unit is in a thermo-off state in which the air conditioning indoor unit is stopped and the indoor fan operates. An air quality improvement mode and an energy saving priority mode are provided as an operation mode of the air conditioning indoor unit, in a case where the air quality improvement mode is selected, the control unit drives the ventilation fan even in a case where the air conditioning indoor unit is in the thermo-off state, and in a case where the energy saving priority mode is selected, and the air conditioning indoor unit is in the thermo-off state, the control unit controls the ventilation fan to operate at mild airflow or stops the ventilation fan. An automatic switching mode is further provided as the operation mode of the air conditioning indoor unit, and in a case where the automatic switching mode is selected, the control unit determines which of the air quality improvement mode and the energy saving priority mode is used in operation on a basis of a temperature difference between an outside temperature and a set temperature.

According to the present invention, a ventilation fan is stopped in a case where an air conditioning indoor unit is stopped, and thus, external air is not introduced by a ventilation device, so that it is possible to prevent reverse flow of air of a suction port filter due to introduction of external air of the air conditioning indoor unit. Further, external air does not enter the room in a state where air conditioning operation is stopped, so that it is possible to prevent unnecessary fluctuation of a room air temperature. Thus, by releasing coordination between the indoor fan and the ventilation fan when air conditioning operation is stopped while assuming that the ventilation fan is driven in coordination with the indoor fan, it is possible to prevent convenience from being impaired in use while preventing reverse flow of air.

### BRIEF DESCRIPTION OF THE DRAWINGS

Figure 1 is a schematic configuration diagram illustrating an air conditioning system in a first embodiment;
Figure 2 is a plan view illustrating an air conditioning indoor unit in the first embodiment viewed from below;
Figure 3 is a cross-sectional diagram illustrating the air conditioning indoor unit in the first embodiment;
Figure 4 is a block diagram illustrating a control configuration in the first embodiment; and
Figure 5 is a timing chart indicating operation in the first embodiment.

### DETAILED DESCRIPTION OF THE PREFERRED EMBODIMENT

### (Knowledge, or the like, that is basis of invention)

At the time when the inventors, and the like, conceived of the present invention, there was an air conditioning system in which an air conditioning indoor unit is connected to a ventilation device with a duct, the air conditioning system providing air conditioning in a room by the air conditioning indoor unit and exhausting air in the room and supplying external air by the ventilation device.

However, in related art, in a case where the ventilation device operates in a state where the air conditioning indoor unit is stopped, there is a possibility that a pressure is applied to the air conditioning indoor unit due to introduction of external air by the ventilation device, which may cause reverse flow of air of a suction port filter of the air conditioning indoor unit. Further, if the ventilation device operates and performs ventilation although the air conditioning indoor unit stops air conditioning operation as a result of a temperature reaching a room air temperature, the room air temperature changes. The inventors, and the like, found a problem that this change of the room air temperature starts air conditioning operation, which may waste energy, and conceived of subject of the present disclosure to solve the problem.

The present disclosure provides an air conditioning system capable of securing convenience of a user by preventing reverse flow of air in a state where an air conditioning indoor unit is stopped and capable of achieving energy saving.

Embodiments will be described in detail below with reference to the drawings. However, there is a case where detailed description more than necessary will be omitted. For example, there is a case where detailed description of matters that have already been known well or overlapping description of substantially identical components will be omitted to avoid unnecessary redundant description and to facilitate understanding by a person skilled in the art.

Note that the accompanying drawings and the following description are provided to allow a person skilled in the art to sufficiently understand the present disclosure, and thus, these are not intended to limit the subject recited in the claims.

### (First embodiment)

A first embodiment will be described below using the drawings.

### [1-1. Configuration]

### [1-1-1. Configuration of air conditioning system]

An embodiment of the present invention will be described below with reference to the drawings.

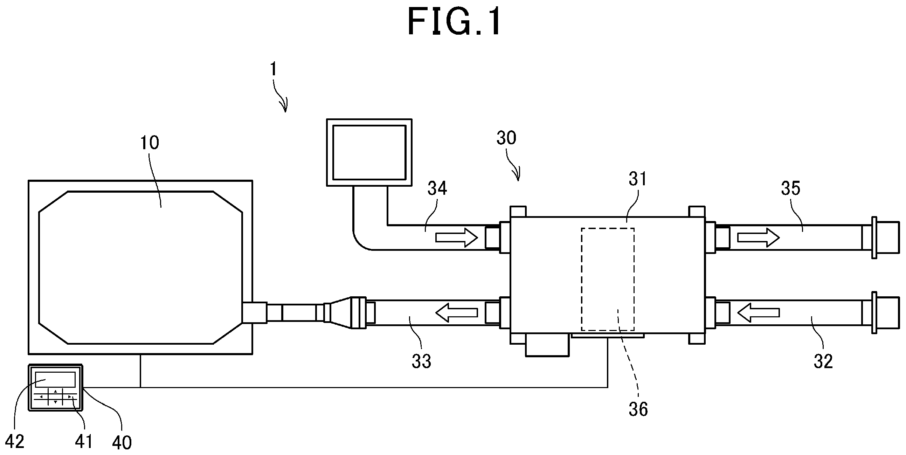

Figure 1 is a schematic configuration diagram illustrating an air conditioning system in a first embodiment.

As illustrated in Figure 1, an air conditioning system 1 includes an air conditioning indoor unit 10 and a ventilation device 30.

The ventilation device 30 includes a ventilation unit 31.

To the ventilation unit 31, an outdoor side air intake duct 32 that is communicated with outdoor and an indoor side air intake duct 33 that is communicated with an air intake side in the air conditioning indoor unit 10 are connected.

To the ventilation unit 31, an indoor side exhaust air duct 34 that performs ventilation and is communicated with indoor, and an outdoor side exhaust air duct 35 that is communicated with outdoor are connected.

The ventilation unit 31 includes a heat exchange module 36. The heat exchange module 36 performs heat exchange between air flowing through the indoor side exhaust air duct 34 and the outdoor side exhaust air duct 35 and air flowing through the outdoor side air intake duct 32 and the indoor side air intake duct 33.

Note that the heat exchange module 36 may be a total heat exchanger.

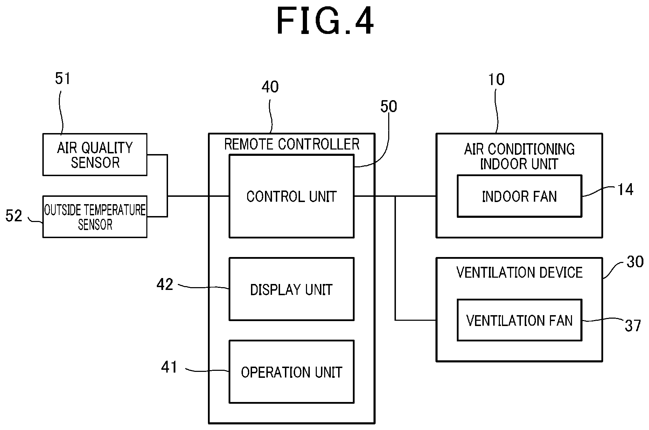

The ventilation unit 31 includes a ventilation fan 37 (see Figure 4).

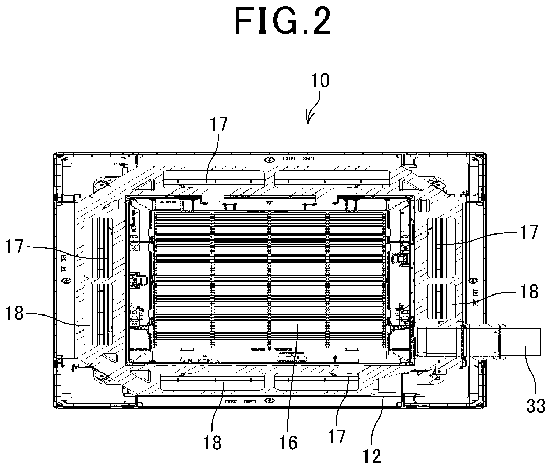

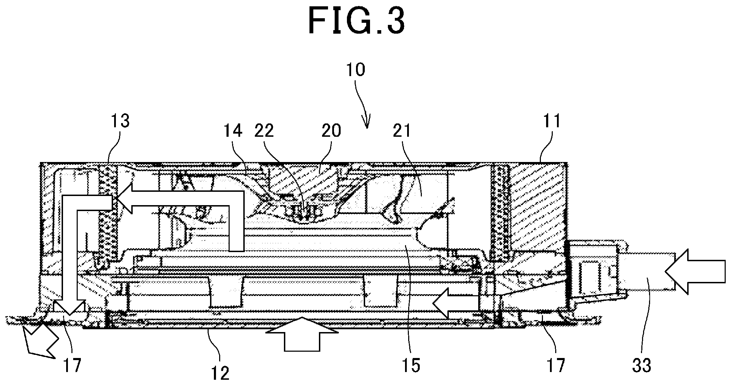

Figure 2 is a plan view illustrating an air conditioning indoor unit in the first embodiment viewed from below. Figure 3 is a cross-sectional diagram illustrating the air conditioning indoor unit.

As illustrated in Figure 2 and Figure 3, the air conditioning indoor unit 10 includes an indoor unit body 11 and a decorative panel 12 that covers a lower opening of the indoor unit body 11.

Inside the indoor unit body 11, a heat exchanger 13, an indoor fan 14 and a bell mouse 15 are provided.

The decorative panel 12 is formed in a substantially quadrangular plate shape in plan view so as to cover the opening on a lower surface of the indoor unit body 11.

In a central portion of the decorative panel 12, a suction port 16 that is communicated with the bell mouse 15 is formed. On the indoor unit body 11 side of the decorative panel 12, a filter (not illustrated) for removing dust, and the like, in the air is provided.

At portions outside the suction port 16 of the decorative panel 12 and along respective sides of an outer peripheral portion of the decorative panel 12, vents 17 that send air subjected to air conditioning into the room are respectively provided. Flaps 18 whose air flow directions can be adjusted are respectively provided at the vents 17.

The indoor fan 14 includes a fan motor 20 and a centrifugal fan 21. The fan motor 20 includes a rotation shaft 22 extending downward, and the centrifugal fan 21 is fixed at the rotation shaft 22. The fan motor 20 is fixed at a top panel of the indoor unit body 11.

The heat exchanger 13 is formed so as to enclose substantially the whole of the indoor fan 14 from the side and so as to fold the plate-like heat exchanger 13 in a substantially quadrangular shape in plan view.

The heat exchanger 13 functions as an evaporator of a refrigerant during cooling operation and functions as an evaporator of the refrigerant during heating operation. The heat exchanger 13 exchanges heat between air in the room to be suctioned to inside of the indoor unit body 11 via the suction port 16 and the refrigerant so as to be able to cool air in the air-conditioned room during cooling operation and heat air in the room during heating operation.

If the air conditioning indoor unit 10 is made to operate, air in the room is suctioned from the suction port 6 by rotation of the indoor fan 14, blown outside by the indoor fan 14, subjected to heat exchange while passing through the heat exchanger 13 and blown out inside the room from the vents 17.

Further, in the present embodiment, the indoor side air intake duct 33 connected to the ventilation device 30 is connected on a side surface of a chassis. The indoor side air intake duct 33 is communicated with space between the suction port 16 and the indoor fan 14.

This makes it possible to introduce external air inside the room via each of the outdoor side air intake duct 32 and the indoor side air intake duct 33.

Further, a remote controller 40 is connected to the air conditioning indoor unit 10 and the ventilation device 30. While the remote controller 40 is connected in a wired manner, the remote controller 40 may be connected in a wireless manner.

The remote controller 40, which is used to operate the air conditioning indoor unit 10 and the ventilation device 30, includes an operation unit 41 including an operation switch, and the like, and a display unit 42 including a liquid crystal display element, and the like.

The remote controller 40 includes a control unit 50 for controlling respective units of the air conditioning indoor unit 10 and the ventilation device 30.

### [1-1-2. Control configuration]

A control configuration of the present embodiment will be described next.

Figure 4 is a block diagram illustrating a control configuration of an air conditioning device of the present embodiment.

As illustrated in Figure 4, the control unit 50 provided at the remote controller 40 includes a storage unit and is a processor such as a central processing unit (CPU) and a micro processing unit (MPU) that operates on the basis of programs stored in advance in the storage unit. The control unit 50 may include a single processor or may include a plurality of processors. Note that a digital signal processor (DSP), or the like, may be used as the control unit 50. Further, a control circuit such as a large scale integration (LSI), an application specific integrated circuit (ASIC) and a field-programming gate array (FPGA) may be used as the control unit 50.

The control unit 50 controls respective units such as the indoor fan 14 of the air conditioning indoor unit 10 and the ventilation fan 37 of the ventilation device 30.

To the control unit 50, an air quality sensor 51 that detects air quality in the room is connected. The air quality sensor 51 detects, for example, carbon dioxide concentration in the air in the room in the present embodiment.

Note that the air quality sensor 51 may detect, for example, PM2.5, pollen, and the like, other than carbon dioxide concentration.

Further, an outside temperature sensor 52 is connected to the control unit 50.

### [1-2. Operation]

Operation of the present embodiment will be described next.

If the air conditioning indoor unit 10 is made to operate, the indoor fan 14 is rotationally driven, air in the room is suctioned from the suction port 16 by the indoor fan 14, subjected to heat exchange at the heat exchanger 13 and blown out inside the room from the vents 17.

On the other hand, if the ventilation fan 37 of the ventilation device 30 is made to operate, air in the room is exhausted to outside via the indoor side exhaust air duct 34 and the outdoor side exhaust air duct 35.

Further, external air is sent to the air conditioning indoor unit 10 via the outdoor side air intake duct 32 and the indoor side air intake duct 33, and air conditioning in the room is performed while external air is introduced.

In this case, the control unit 50 performs control to drive the ventilation fan 37 in a case where the indoor fan 14 is driven and stop the ventilation fan 37 in a case where the indoor fan 14 is stopped. In other words, in principle, the indoor fan 14 of the air conditioning indoor unit 10 and the ventilation fan 37 of the ventilation device 30 are controlled so as to coordinate with each other.

Then, the control unit 50 performs control to stop the ventilation fan 37 in a case where the indoor fan 14 is driven after operation of the air conditioning indoor unit 10 is stopped.

The case where the indoor fan 14 is driven after operation of the air conditioning indoor unit 10 is stopped is, for example, a case where internal cleaning operation of drying the heat exchanger 13 is performed by circulating air inside the air conditioning indoor unit 10 through so-called short-circuit in which air blown out by the indoor fan 14 is suctioned from the suction port 16, a case where sterilization operation of sterilizing inside of the air conditioning indoor unit 10 or inside the room by an electrostatic atomization device, or the like, provided inside the air conditioning indoor unit 10.

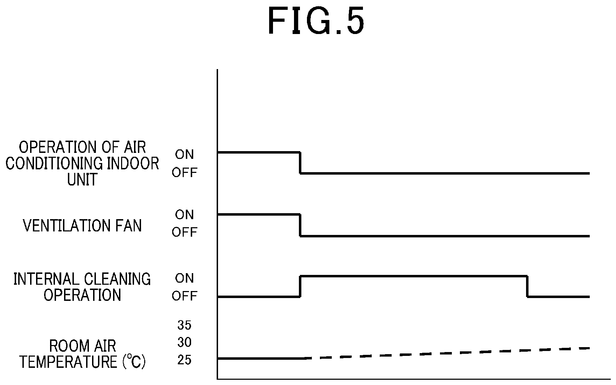

Figure 5 is a timing chart indicating operation of the present embodiment.

As illustrated in Figure 5, in a state where the air conditioning indoor unit 10 operates, the ventilation fan 37 is also driven. Then, in a case where the air conditioning indoor unit 10 is stopped, and the indoor fan 4 is driven as a result of internal cleaning operation being started, the ventilation fan 37 is stopped.

In this case, if the ventilation fan 37 is driven and external air is introduced, there is a case where a pressure is applied to the air conditioning indoor unit 10 by introduction of external air by the ventilation device 30, and air of the filter of the suction port 16 of the air conditioning indoor unit 10 may reversely flow.

As in the present embodiment, in a state where the operation of the air conditioning indoor unit 10 is stopped, and the indoor fan 14 operates, stopping the ventilation fan 37 can prevent reverse flow of air at the suction port 16.

Further, if the ventilation fan 37 is made to operate in a state where the air conditioning indoor unit 10 is stopped, there is a possibility that although air conditioning operation is stopped as a result of it being determined that a room air temperature is appropriate, the room air temperature may change contrary to intention of a user if the ventilation fan 37 is driven.

As in the present embodiment, in a state where operation of the air conditioning indoor unit 10 is stopped and the indoor fan 14 operates, stopping the ventilation fan 37 can prevent unexpected fluctuation of the room air temperature.

The control unit 50 stops the ventilation fan 3 of the ventilation device 30 or controls the ventilation fan 3 of the ventilation device 30 to operate at mild airflow in a case where the air conditioning indoor unit 10 is in a thermo-off state.

If the ventilation fan 37 is driven in a case of the thermo-off state, external air is introduced into the room, and the room air temperature changes, and thus, it is possible to prevent the air conditioning indoor unit 10 from putting into a thermos-on state.

Further, the air conditioning indoor unit 10 has two operation modes of an air quality improvement operation mode and an energy saving priority mode as the operation mode of the air conditioning indoor unit 10. Whether the operation is performed in the air quality improvement mode or the energy saving priority mode can be selected by the user operating the operation unit 41 of the remote controller 40.

The air quality improvement mode is a mode for improving air quality on the basis of an air quality state inside the room by the air quality sensor 51. Specifically, the air quality state is determined by carbon dioxide concentration in the air in the room in the present embodiment.

For example, in a case where the control unit 50 determines that carbon dioxide concentration in the air in the room becomes equal to or higher than 1000 ppm on the basis of a detection value of the air quality sensor 51, the ventilation fan 37 is made to operate to send external air to the air conditioning indoor unit 10 via the outdoor side air intake duct 32 and the indoor side air intake duct 33 and exhaust air in the room to outside via the indoor side exhaust air duct 34 and the outdoor side exhaust air duct 35.

Further, in the energy saving priority mode, in a case where the air conditioning indoor unit 10 is stopped and the indoor fan 14 operates during internal cleaning operation, sterilization operation, thermo-off operation, or the like, as described above, the control unit 50 performs control to stop the ventilation fan 3.

Note that in this case, the ventilation fan 37 may be made to operate at mild airflow so as not to largely affect the room air temperature instead of being completely stopped.

Further, the air conditioning indoor unit 10 may have an automatic switching mode in which the operation mode is automatically switched between the air quality improvement mode and the energy saving priority mode.

In a case where the automatic switching mode is selected, the control unit 50 determines which of the air quality improvement mode and the energy saving priority mode is used in operation, for example, on the basis of a difference between an outside temperature detected by the outside temperature sensor 52 and a set temperature by the remote controller 40.

In this manner, by determining which of the air quality improvement mode and the energy saving priority mode is used in operation on the basis of the difference between the outside temperature and the set temperature, it is possible to perform operation in accordance with thermal load conditions.

Further, in a case where the automatic switching mode is selected, the control unit 50 may determine which of the air quality improvement mode and the energy saving priority mode is used in operation on the basis of the air quality state within a space to be subjected to air conditioning.

In this case, by determining which of the air quality improvement mode and the energy saving priority mode is used in operation on the basis of the air quality state in the room, it is possible to perform operation in accordance with the air quality state in the room.

Note that in a case where the air conditioning indoor unit 10 performs defrosting operation, the control unit 50 stops the ventilation fan 37 regardless of whether or not the indoor fan 14 is driven. This makes it possible to prevent cold air from being supplied to the room in winter.

### [1-3. Effects, or the like]

As described above, in the present embodiment, the air conditioning indoor unit 10 including the indoor fan 14 and the heat exchanger is connected to the ventilation device 30 including the ventilation fan 37 with a duct, the control unit 50 that drives and controls the indoor fan 14 and the ventilation fan 37 is provided, and the control unit 50 performs control to drive the ventilation fan 37 in a case where the indoor fan 14 is driven, stop the ventilation fan 37 in a case where the indoor fan 14 is stopped and stop the ventilation fan 37 in a case where the indoor fan 14 is driven after operation of the air conditioning indoor unit 10 is stopped.

By this means, in a case where the air conditioning indoor unit 10 is stopped, the ventilation fan 37 is stopped, and thus, external air is not introduced by the ventilation device 30, so that it is possible to prevent reverse flow of air of the filter of the suction port 16 by introduction of external air into the air conditioning indoor unit 10. Further, external air does not enter the room in a state where air conditioning operation is stopped, so that it is possible to prevent unnecessary fluctuation of the room air temperature. Thus, it is possible to release coordination between the indoor fan 14 and the ventilation fan 37 after air conditioning operation is stopped while assuming that the ventilation fan 37 is driven in coordination with the indoor fan 14 and prevent convenience of the user from being impaired while preventing reverse flow of air.

Further, in the present embodiment, the control unit 50 stops the ventilation fan 37 of the ventilation device 30 or controls the ventilation fan 37 of the ventilation device 30 to operate at mild airflow in a case where the air conditioning indoor unit 10 is in a thermo-off state.

This can prevent the air conditioning indoor unit 10 from putting into a thermos-on state as a result of external air being introduced in the thermo-off state.

Further, in the present embodiment, the air quality improvement mode and the energy saving priority mode are provided as the operation mode of the air conditioning indoor unit 10, and in a case where the air quality improvement mode is selected, the control unit 50 drives the ventilation fan 37 even in a case where the air conditioning indoor unit 10 is in a thermo-off state, and in a case where the energy saving priority mode is selected, and the air conditioning indoor unit 10 is in a thermo-off state, the control unit 50 controls the ventilation fan 37 to operate at mild airflow or stops the ventilation fan 37.

This enables operation to be performed in the air quality improvement mode or the energy saving priority mode in response to a request by the user.

Further, in the present embodiment, the automatic switching mode is further provided as the operation mode of the air conditioning indoor unit 10, and in a case where the automatic switching mode is selected, the control unit 50 determines which of the air quality improvement mode and the energy saving priority mode is used in operation on the basis of a temperature difference between the outside temperature and the set temperature.

This makes it possible to determine which of the air quality improvement mode and the energy saving priority mode is used in operation on the basis of thermal load conditions by a temperature difference between the outside temperature and the set temperature.

Further, in the present embodiment, the automatic switching mode is further provided as the operation mode of the air conditioning indoor unit 10, and in a case where the automatic switching mode is selected, the control unit 50 determines which of the air quality improvement mode and the energy saving priority mode is used in operation on the basis of the air quality state in the space to be subjected to air conditioning.

This makes it possible to determine which of the air quality improvement mode and the energy saving priority mode is used in operation on the basis of the air quality state in the room.

### (Other embodiments)

The first embodiment has been described above as an example of the technique disclosed in the present application. However, the technique in the present disclosure is not limited to this, and the present disclosure can be applied to embodiments obtained by applying change, replacement, addition, omission, or the like. Further, a new embodiment can be obtained by combining respective components described in the first embodiment.

### (Supplementary note)

The following technique is disclosed by description of the above embodiments.

### (Technique 1)

An air conditioning system in which an air conditioning indoor unit including an indoor fan and a heat exchanger is connected to a ventilation device including a ventilation fan with a duct, the air conditioning system including a control unit that drives and controls the indoor fan and the ventilation fan, the control unit performing control to drive the ventilation fan in a case where the indoor fan is driven, stop the ventilation fan in a case where the indoor fan is stopped and stop the ventilation fan in a case where the indoor fan is driven after operation of the air conditioning indoor unit is stopped.

According to this configuration, the ventilation fan is stopped in a case where the air conditioning indoor unit is stopped, and thus, external air is not introduced by the ventilation device, so that it is possible to prevent air of the suction port filter from reversely flowing by introduction of external air into the air conditioning indoor unit. Further, external air does not enter the room in a state where the air conditioning operation is stopped, so that it is possible to prevent unnecessary fluctuation of the room air temperature. It is therefore possible to prevent convenience of the user from being impaired while preventing reverse flow of air by releasing coordination between the indoor fan and the ventilation fan while air conditioning operation is stopped while assuming that the ventilation fan is driven in coordination with the indoor fan.

### (Technique 2)

The air conditioning system according to technique 1, in which the control unit stops the ventilation fan of the ventilation device or controls the ventilation fan of the ventilation device to operate at mild airflow in a case where the air conditioning indoor unit is in a thermo-off state.

According to this configuration, it is possible to prevent a state from becoming a thermos-on state as a result of external air being introduced in the thermo-off state.

### (Technique 3)

The air conditioning system according to technique 2, in which an air quality improvement mode and an energy saving priority mode are provided as an operation mode of the air conditioning indoor unit, and in a case where the air quality improvement mode is selected, the control unit drives the ventilation fan even in a case where the air conditioning indoor unit is in the thermo-off state, and in a case where the energy saving priority mode is selected, and the air conditioning indoor unit is in the thermo-off state, the control unit controls the ventilation fan to operate at mild airflow or stops the ventilation fan.

According to this configuration, it is possible to perform operation in the air quality improvement mode or the energy saving priority mode in response to a request of the user.

### (Technique 4)

The air conditioning system according to technique 3, in which an automatic switching mode is further provided as the operation mode of the air conditioning indoor unit, and in a case where the automatic switching mode is selected, the control unit determines which of the air quality improvement mode and the energy saving priority mode is used in operation on the basis of a temperature difference between an outside temperature and a set temperature.

According to this configuration, it is possible to determine which of the air quality improvement mode and the energy saving priority mode is used in operation on the basis of thermal load conditions by the temperature difference between the outside temperature and the set temperature.

### (Technique 5)

The air conditioning system according to technique 3, in which an automatic switching mode is further provided as the operation mode of the air conditioning indoor unit, and in a case where the automatic switching mode is selected, the control unit determines which of the air quality improvement mode and the energy saving priority mode is used in operation on the basis of an air quality state in a space to be subjected to air conditioning.

According to this configuration, it is possible to determine which of the air quality improvement mode and the energy saving priority mode is used in operation on the basis of the air quality state in the room.

The present disclosure can be applied to an air conditioning system capable of securing convenience of a user by preventing reverse flow of air in a state where an air conditioning indoor unit is stopped and capable of achieving energy saving.

### Reference Signs List

- 1: Air conditioning system
- 10: Air conditioning indoor unit
- 11: Indoor unit body
- 12: Decorative panel
- 13: Heat exchanger
- 14: Indoor fan
- 15: Bell mouse
- 16: Suction port
- 17: Vent
- 18: Flap
- 20: Fan motor
- 21: Centrifugal fan
- 22: Rotation shaft
- 30: Ventilation device
- 31: Ventilation unit
- 32: Outdoor side air intake duct
- 33: Indoor side air intake duct
- 34: Indoor side exhaust air duct
- 35: Outdoor side exhaust air duct
- 36: Heat exchange module
- 37: Ventilation fan
- 40: Remote controller
- 41: Operation unit
- 42: Display unit
- 50: Control unit
- 51: Air quality sensor
- 52: Outside temperature sensor

## Claims

1. An air conditioning system (1) in which an air conditioning indoor unit (10) including an indoor fan (14) and a heat exchanger (13) is connected to a ventilation device (30) including a ventilation fan (37) with an indoor side exhaust air duct (34),
**characterized in that**
when the ventilation fan (37) is made to operate, air in a room is exhausted to outside via the indoor side exhaust air duct (34) and an outdoor side exhaust air duct (35) of the ventilation device (30),
external air is sent to the air conditioning indoor unit (10) via an outdoor side air intake duct (32) and an indoor side air intake duct (33), and air conditioning in the room is performed while the external air is introduced,
the air conditioning system (1) comprises :
a control unit (50) that drives and controls the indoor fan (14) and the ventilation fan (37),
wherein the control unit (50) performs control to drive the ventilation fan (37) in a case where the indoor fan (14) is driven, and stop the ventilation fan (37) in a case where the indoor fan (14) is stopped,
wherein the control unit (50) performs control to stop the ventilation fan (37) in a case where the indoor fan (14) is driven after operation of the air conditioning indoor unit (10) is stopped,
wherein the control unit (50) stops the ventilation fan (37) of the ventilation device (30) or controls the ventilation fan (37) of the ventilation device (30) to operate at mild airflow in a case where the air conditioning indoor unit (10) is in a thermo-off state in which the air conditioning indoor unit (10) is stopped and the indoor fan (14) operates,
wherein an air quality improvement mode and an energy saving priority mode are provided as an operation mode of the air conditioning indoor unit (10),
in a case where the air quality improvement mode is selected, the control unit (50) drives the ventilation fan (37) even in a case where the air conditioning indoor unit (10) is in the thermo-off state,
in a case where the energy saving priority mode is selected, and the air conditioning indoor unit (10) is in the thermo-off state, the control unit (50) controls the ventilation fan (37) to operate at mild airflow or stops the ventilation fan (37), and
wherein an automatic switching mode is further provided as the operation mode of the air conditioning indoor unit (10), and
in a case where the automatic switching mode is selected, the control unit (50) determines which of the air quality improvement mode and the energy saving priority mode is used in operation on a basis of a temperature difference between an outside temperature and a set temperature.

## Patentansprüche

1. Klimatisierungssystem (1), bei dem eine Klimatisierungs-Inneneinheit (10), die ein Innengebläse (14) und einen Wärmetauscher (13) enthält, mit einer Belüftungsvorrichtung (30), die ein Belüftungsgebläse (37) mit einem innenseitigen Abluftkanal (34) enthält, verbunden ist,
**dadurch gekennzeichnet, dass**
wenn das Belüftungsgebläse (37) in Betrieb genommen wird, die Luft in einem Raum über den innenseitigen Abluftkanal (34) und einen außenseitigen Abluftkanal (35) der Belüftungsvorrichtung (30) nach außen abgeführt wird,
Außenluft über einen außenseitigen Lufteinlasskanal (32) und einen innenseitigen Lufteinlasskanal (33) in die Klimatisierungs-Inneneinheit (10) geleitet wird, und die Klimatisierung des Raums durchgeführt wird, während die Außenluft eingeleitet wird,
das Klimatisierungssystem (1) umfasst:
eine Steuereinheit (50), die das Innenraumgebläse (14) und das Belüftungsgebläse (37) antreibt und steuert,
wobei die Steuereinheit (50) eine Steuerung durchführt, um das Belüftungsgebläse (37) anzutreiben, wenn das Innengebläse (14) angetrieben wird, und das Belüftungsgebläse (37) zu stoppen, wenn das Innengebläse (14) gestoppt wird,
wobei die Steuereinheit (50) eine Steuerung durchführt, um das Belüftungsgebläse (37) zu stoppen, wenn das Innengebläse (14) angetrieben wird, nachdem der Betrieb der Klimatisierungs-Inneneinheit (10) gestoppt wurde,
wobei die Steuereinheit (50) das Belüftungsgebläse (37) der Belüftungsvorrichtung (30) stoppt oder das Belüftungsgebläse (37) der Belüftungsvorrichtung (30) so steuert, dass es mit einem geringen Luftstrom arbeitet, wenn sich die Klimatisierungs-Inneneinheit (10) in einem Thermo-Aus-Zustand befindet, in dem die Klimatisierungs-Inneneinheit (10) gestoppt ist und das Innengebläse (14) in Betrieb ist,
wobei ein Luftqualitätsverbesserungsmodus und ein Energiesparprioritätsmodus als Betriebsmodi der Klimatisierungs-Inneneinheit (10) vorgesehen sind,
wobei dann, wenn der Luftqualitätsverbesserungsmodus ausgewählt ist, die Steuereinheit (50) das Belüftungsgebläse (37) auch dann antreibt, wenn sich die Klimatisierungs-Inneneinheit (10) im Thermo-Aus-Zustand befindet,
wobei dann, wenn der Energiesparprioritätsmodus ausgewählt ist und die Klimatisierungs-Inneneinheit (10) sich im Thermo-Aus-Zustand befindet, die Steuereinheit (50) das Belüftungsgebläse (37) so steuert, dass es mit einem geringen Luftstrom betrieben wird, oder das Belüftungsgebläse (37) stoppt, und
wobei ferner ein automatischer Umschaltmodus als Betriebsmodus der Klimatisierungs-Inneneinheit (10) vorgesehen ist, und
wobei dann, wenn der automatische Umschaltmodus ausgewählt ist, die Steuereinheit (50) auf der Grundlage einer Temperaturdifferenz zwischen einer Außentemperatur und einer Solltemperatur bestimmt, welcher von dem Luftqualitätsverbesserungsmodus und dem Energiesparprioritätsmodus im Betrieb verwendet wird.

## Revendications

1. Système de climatisation (1) dans lequel une unité intérieure de climatisation (10) comportant un ventilateur intérieur (14) et un échangeur de chaleur (13) est reliée à un dispositif de ventilation (30) comportant un ventilateur de ventilation (37) pourvu d'un conduit d'air d'échappement (34) côté intérieur,
**caractérisé en ce que**
lorsque le ventilateur de ventilation (37) est amené à fonctionner, de l'air dans une pièce est évacué vers l'extérieur par l'intermédiaire du conduit d'air d'échappement (34) côté intérieur et d'un conduit d'air d'échappement (35) côté extérieur du dispositif de ventilation (30),
de l'air externe est envoyé à l'unité intérieure de climatisation (10) par l'intermédiaire d'un conduit d'admission d'air (32) côté extérieur et d'un conduit d'admission d'air (33) côté intérieur et la climatisation dans la pièce est effectuée tandis que l'air externe est introduit,
le système de climatisation (1) comprend :
une unité de commande (50) qui entraîne et commande le ventilateur intérieur (14) et le ventilateur de ventilation (37),
l'unité de commande (50) effectuant une commande d'entraînement du ventilateur de ventilation (37) dans un cas où le ventilateur intérieur (14) est entraîné et une commande d'arrêt du ventilateur de ventilation (37) dans un cas où le ventilateur intérieur (14) est arrêté,
l'unité de commande (50) effectuant une commande d'arrêt du ventilateur de ventilation (37) dans un cas où le ventilateur intérieur (14) est entraîné après l'arrêt du fonctionnement de l'unité intérieure de climatisation (10),
l'unité de commande (50) arrêtant le ventilateur de ventilation (37) du dispositif de ventilation (30) ou commandant le fonctionnement du ventilateur de ventilation (37) du dispositif de ventilation (30) à un flux d'air doux dans un cas où l'unité intérieure de climatisation (10) est dans un état d'arrêt thermique dans lequel l'unité intérieure de climatisation (10) est arrêtée et le ventilateur intérieur (14) fonctionne,
un mode d'amélioration de la qualité de l'air et un mode de priorité d'économie d'énergie étant fournis en tant que mode de fonctionnement de l'unité intérieure de climatisation (10),
dans un cas où le mode d'amélioration de la qualité de l'air est sélectionné, l'unité de commande (50) entraîne le ventilateur de ventilation (37) même dans un cas où l'unité intérieure de climatisation (10) est dans l'état d'arrêt thermique,
dans un cas où le mode de priorité d'économie d'énergie est sélectionné et l'unité intérieure de climatisation (10) est dans l'état d'arrêt thermique, l'unité de commande (50) commande le fonctionnement du ventilateur de ventilation (37) à un flux d'air doux ou arrête le ventilateur de ventilation (37) et
un mode de commutation automatique étant en outre fourni en tant que mode de fonctionnement de l'unité intérieure de climatisation (10) et
dans un cas où le mode de commutation automatique est sélectionné, l'unité de commande (50) détermine quel mode parmi le mode d'amélioration de la qualité de l'air et le mode de priorité d'économie d'énergie est utilisé en fonctionnement sur la base d'une différence de température entre une température extérieure et une température de consigne.
